Europäisches Patentamt

European Patent Office

Office européen des brevets

(19)

(11) **EP 1 115 108 A2**

## (12) EUROPEAN PATENT APPLICATION

(43) Date of publication:
**11.07.2001 Bulletin 2001/28**

(51) Int Cl.⁷: **G11B 7/00**, G11B 7/007

(21) Application number: **01100276.3**

(22) Date of filing: **03.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **07.01.2000 JP 2000005849**<br>**08.05.2000 JP 2000139388**<br><br>(71) Applicant: **SONY CORPORATION**<br>**Tokyo (JP)** | (72) Inventor: **Kobayashi, Seiji**<br>**Shinagawa-ku, Tokyo (JP)**<br><br>(74) Representative: **Melzer, Wolfgang, Dipl.-Ing. et al**<br>**Patentanwälte**<br>**Mitscherlich & Partner,**<br>**Sonnenstrasse 33**<br>**80331 München (DE)** |

(54) **Multilevel information recording by structural displacements**

(57) The invention provides an information recording by which multi-value recording with high density can be achieved while preventing an increase of the error rate effectively and tracks can be formed in a comparatively small track pitch in multi-value recording while minimizing crosstalk. The dc component and high frequency components of a multi-value signal are suppressed within a range within which intersymbol interference does not occur between adjacent data to produce a modulation signal, and the modulation signal is recorded as a displacement of a groove wall face or the like. Further, tracks are formed such that the track pitch normalized with a resolving power may fall within a range from 0.44 to 0.60.

FIG. 7

EP 1 115 108 A2

**Description**

BACKGROUND OF THE INVENTION

This invention relates to an information recording medium, an information playback apparatus, an information playback method, an information recording apparatus and an information recording method and can be applied, for example, to an optical disk system.

Optical disks such as a compact disk, a digital video disk and a mini disk are conventionally known. On such optical disks, pits and marks are sequentially formed with reference to a predetermined reference period T to record desired data.

In compliance with such optical disks, optical disk apparatus such as a compact disk player receive returning light obtained by irradiation of a laser beam upon an optical disk to obtain a playback signal whose signal level varies in response to such pits and marks and discriminates the playback signal between two values thereby to play back the data recorded on the optical disk.

In contrast with such an optical disk on which desired data are recorded with two values as described above, conventionally a method has been proposed wherein the reflection factor of an optical disk is changed over among multiple stages to record desired data with multi-values or the width, depth or the like of pits is changed over in multiple stages to record desired data with multi-values thereby to augment the recording density of the optical disk.

In particular, in Japanese Patent Laid-Open No. 94244/1986, a method is disclosed wherein the number of beams is changed over to change over the light amount of laser beams to be irradiated upon an optical disk in response to the data value thereby to change over the depth of a pit to be formed on the optical disk in multiple stages in accordance with the data value.

Japanese Patent Laid-Open No. 31329/1990 (U.S. Patent No. 5,136,573) discloses another method wherein a laser beam is irradiated upon a phase variation recording medium with the light amount thereof changed over in response to a data value to vary the phase of the phase variation recording medium in a plurality of stages in accordance with the data value. Japanese Patent Laid-Open No. 238088/1992 discloses a further method wherein, as a method of recording multi-value information as a variation of the coordination environment of a metallic complex substance, for example, where the octahedral coordination is used, six variations in the maximum are used to achieve multi-value recording with six values in the maximum.

The multi-value recording methods, however, commonly have a problem in that, where it is tried to record in a higher density, the error rate significantly increases due to a variation of the dc level and intersymbol interference of a playback signal.

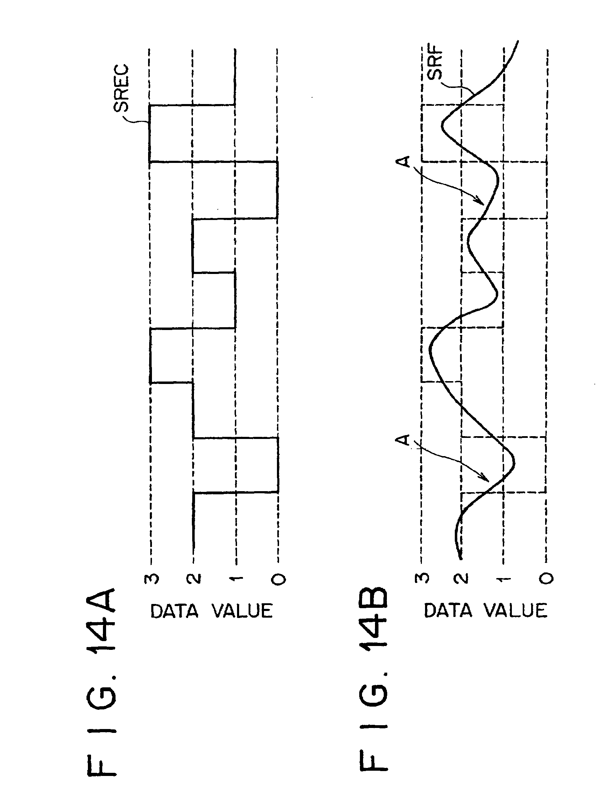

In particular, a concept of multi-level recording is illustrated in a characteristic diagram of FIGS. 14A and 14B. In the conventional multi-value recording, a recording signal SREC whose signal level varies in response to the data value of information to be recorded is recorded onto an optical disk (FIG. 14A). Upon playback, a playback signal SRF corresponding to the recording signal SREC is discriminated with multi-stage threshold values suitable for the data value to decode it into original multi-value data.

Since such a principle as just described is premised, in the conventional multi-value recording, when the dc level of the playback signal SRF varies as a whole or in a like case, it is difficult to obtain a correct decoding result, and as a result, the error rate exhibits a significant increase.

As one of solutions to the problem, it is a possible idea to record a reference level on an optical disk as disclosed, for example, in Japanese Patent Laid-Open No. 237622/1991. In particular, a reference pit is formed on an optical disk and a playback signal level obtained from the reference pit is used as a'reference level to discriminate the playback signal level.

However, the signal level obtained from the reference pit may possibly be influenced by noise, or the reference pit may not possibly be played back correctly due to a defect on-the disk as well. Consequently, the method described has a problem in that it is necessary to form a large number of reference pits after all and the recording density of the optical disk drops as much.

Actually, in recording and playback systems, intersymbol interference between adjacent codes cannot be avoided because they have a definite frequency band. Particularly, as seen in FIG. 14B, the playback signal SRF obtained by playback of the optical disk has a dull signal waveform wherein high frequency components are suppressed with respect to the recording signal SREC. As a result, it is difficult to discriminate data correctly typically at a location indicated by an arrow mark A of FIG. 14b. It is to be noted that such wrong discrimination is caused by data values of adjacent codes and therefore is regarded as an error by intersymbol interference.

A method which solves the two problems described above is disclosed, for example, in Japanese Patent Laid-Open No. 333342/1994 (U.S. Patent No. 5,642,345) wherein a multi-value digital modulation signal such as, for example, a QAM (Quadrature Amplitude Modulation) signal is further frequency modulated to produce a recording signal and a pit train is formed with a compression corresponding to the recording signal. In particular, according to the method mentioned, a recording signal is produced as a frequency modulation signal, and consequently, a playback signal can be processed while preventing a variation of the dc level arising from a reflection factor of the optical disk or the like. Further, by suppressing intersymbol interference upon digital modulation, also the increase of the error rate by intersymbol interference can be prevented.

However, if attention is paid to a frequency spectrum by a frequency modulation signal, it can be recognized that, where a recording signal is produced by frequency modulation, the frequency band of the recording and playback systems cannot be utilized sufficiently effectively after all. Consequently, although the method allows multi-value recording, the recording density of the optical disk as a whole cannot be increased very much when compared with the optical disk on which data are recorded alternatively with two values.

SUMMARY OF THE INVENTION

It is an object of the present invention to provide an information recording medium, an information playback apparatus, an information playback method, an information recording apparatus and an information recording method by which multi-value recording in a high density can be achieved while preventing an increase of the error rate effectively.

It is another object of the present invention to provide an information recording medium, an information playback apparatus, an information playback method, an information recording apparatus and an information recording method by which tracks can be formed in a comparatively small track pitch in multi-value recording while minimizing crosstalk.

In order to attain the objects described above, according to the present invention, the dc component and high frequency components of a multi-value signal are suppressed within a range within which intersymbol interference does not occur between adjacent data to produce a modulation signal, and the modulation signal is recorded as a displacement of a groove wall face or the like. Further, tracks are formed such that the track pitch normalized with a resolving power may fall within a range from 0.44 to 0.60.

In particular, according to an aspect of the present invention, there is provided an information recording medium on which data of three or more values are recorded, the data being recorded as a displacement of one of a groove, a groove wall, a mark and a mark wall in response to a modulation signal, the modulation signal being produced from a band-limited signal produced by suppressing a dc component and high frequency components of a data string signal of a broad frequency band, whose value is changed over among three or more values in response to a value of the data, within a range within which intersymbol interference does not occur between adjacent data.

With the information recording medium, the data are recorded as a displacement of one of a groove, a groove wall, a mark and a mark wall in response to a modulation signal, and the modulation signal is produced from a band-limited signal produced by suppressing a dc component and high frequency components of a data string signal of a broad frequency band, whose value is changed over among three or more values in response to a value of the data, within a range within which intersymbol interference does not occur between adjacent data. Consequently, high density recording can be achieved while preventing an increase of the error rate by a variation of the dc level of a playback signal and an increase of the error rate by intersymbol interference.

According to another aspect of the present invention, there is provided an information playback apparatus wherein a laser beam is irradiated upon an information recording medium and returning light is received and processed to play back data recorded on the information recording medium, the information recording medium having the data recorded thereon such that one of a groove, a groove wall, a mark and a mark wall is displaced with a modulation signal produced by suppressing a dc component and high frequency components of a data string signal of the data within a range within which intersymbol interference between adjacent data does not occur, the information playback apparatus comprising detection means for detecting the displacement of the one of the groove, groove wall, mark and mark wall with respect to the track center and outputting a detection result, and decoding means for processing the detection result to play back the data of three or more multi-values.

According to a further aspect of the present invention, there is provided an information playback method wherein a laser beam is irradiated upon an information recording medium and returning light is received and processed to play back data recorded on the information recording medium, the information recording medium having the data recorded thereon such that one of a groove, a groove wall, a mark and a mark wall is displaced with a modulation signal produced by suppressing a dc component and high frequency components of a data string signal of the data within a range within which intersymbol interference between adjacent data does not occur, the information playback method comprising a displacement detection step of detecting the displacement of the one of the groove, groove wall, mark and mark wall with respect to the track center, and a decoding step of processing the detection result of the displacement to play back the data of three or more multi-values.

With the information playback apparatus and the information playback method, since the information recording medium has data recorded thereon such that one of a groove, a groove wall, a mark and a mark wall is displaced with a modulation signal produced by suppressing a dc component and high frequency components of a data string signal of the data within a range within which intersymbol interference between adjacent data does not occur, by processing a detection result of the returning light to play back the data of three or more multi-values, data recorded in a high density can be played back while preventing an increase of the error rate by a variation of the dc level of a playback signal and an increase of the error rate by intersymbol interference.

According a still further aspect of the present invention, there is provided an information recording apparatus for irradiating a laser beam upon an information recording medium to record data on a track of the information recording medium, comprising modulation means for producing a modulation signal from a band-limited signal produced by suppressing a dc component and high frequency components of a data string signal of a broad frequency band, whose value is changed over among three or more values in response to a value of the data, within a range within which intersymbol interference does not occur between adjacent data, and optical means for displacing the laser beam in a direction transverse to the track in response to the modulation signal.

According to a yet further aspect of the present invention, there is provided an information recording method for irradiating a laser beam upon an information recording medium to record data on a track of the information recording medium, comprising a modulation step of producing a modulation signal from a band-limited signal produced by suppressing a dc component and high frequency components of a data string signal of a broad frequency band, whose value is changed over among three or more values in response to a value of the data, within a range within which intersymbol interference does not occur between adjacent data, and a step of displacing the laser beam in a direction transverse to the track in response to the modulation signal.

With the information recording apparatus and the information recording method, a modulation signal is produced from a band-limited signal produced by suppressing a dc component and high frequency components of a data string signal of a broad frequency band, whose value is changed over among three or more values in response to a value of the data, within a range within which intersymbol interference does not occur between adjacent data, and the laser beam is displaced in a direction transverse to the track in response to the modulation signal. Consequently, high density recording can be achieved while preventing an increase of the error rate by a variation of the dc level of a playback signal and an increase of the error rate by intersymbol interference.

According to a yet further aspect of the present invention, there is provided an information recording medium on which data are recorded as a displacement of one of a groove, a groove wall, a mark and a mark wall, where the average distance between adjacent grooves, adjacent groove walls, adjacent marks and adjacent mark wall faces is represented by D, the numerical aperture of an optical system for playing back the data by NA and the wavelength of a laser beam by the optical system by λ, the average distance, the numerical aperture and the wavelength are set so as to satisfy the following expression

$$0.44 < \frac{D}{\frac{\lambda}{NA}} < 0.60$$

With the information recording medium, since data are recorded as a displacement of a groove or the like such that the expression given above is satisfied, the characteristic of the optical system for playing back the data recorded in this manner can be utilized effectively to reduce crosstalk, and bit errors arising from a small track pitch can be prevented as much.

According to a yet further aspect of the present invention, there is provided an information playback apparatus, comprising an optical system for irradiating a laser beam of a wavelength upon an information recording medium, a light receiving element for receiving returning light from the information recording medium, means for processing a signal from the light receiving element to play back data recorded on the information recording medium, the light receiving element having first and second light receiving faces for receiving the returning light which are juxtaposed in a direction along which a track extends across a line extending in a direction transverse to the track, arithmetic operation means for outputting a difference signal of results of light reception of the first and second light receiving faces of the light receiving element, and demodulation means for processing the difference signal to demodulate the data, where the track pitch of the information recording medium is represented by D, the numerical aperture of the optical system by NA and the wavelength of the laser beam by λ, the track pitch, the numerical aperture and the wavelength are set so as to satisfy the following expression

$$0.44 < \frac{D}{\frac{\lambda}{NA}} < 0.60$$

According to a yet further aspect of the present invention, there is provided an information playback method for irradiating a laser beam of a wavelength through an optical system upon an information recording medium on which data are recorded as a displacement of one of a groove, a groove wall face, a mark and a mark wall face and receiving returning light from the information recording medium to play back data recorded on the information recording medium, comprising a step of receiving the returning light by means of first and second light receiving faces of the light. receiving element which are juxtaposed in a direction along which a track extends across a line extending in a direction transverse to the track and producing a difference signal of results of the light reception by the first and second light receiving faces, and a step of processing the difference signal to demodulate the data, where the average distance between two adjacent grooves, adjacent groove walls, adjacent marks and adjacent mark wall faces is represented by D, the numerical aperture of the optical system by NA and the wavelength of the laser beam by λ, the average distance, the numerical aperture and the wavelength are set so as to satisfy the following expression

$$0.44 < \frac{D}{\frac{\lambda}{NA}} < 0.60$$

With the information playback apparatus and the information playback method, the characteristic of the optical system can be utilized effectively to reduce crosstalk, and bit errors arising from a small track pitch can be prevented as much.

In summary, according to the present invention, the dc component and high frequency components of a multi-value signal are suppressed within a range within which intersymbol interference does not occur between adjacent data to produce a modulation signal, and the modulation signal is recorded as a displacement of a groove wall face or the like. Consequently, multi-value recording in a high density can be achieved while preventing an increase of the error rate effectively. Further, tracks can be formed in a comparatively small track pitch in multi-value recording while minimizing crosstalk.

The above and other objects, features and advantages of the present invention will become apparent from the following description and the appended claims, taken in conjunction with the accompanying drawings in which like parts or elements denoted by like reference symbols.

BRIEF DESCRIPTION OF THE DRAWINGS

FIG. 1 is a block diagram showing a modulation circuit of a disk recording apparatus to which the present invention is applied;
FIG. 2 is a block diagram showing the optical disk recording apparatus to which the present invention is applied;
FIG. 3 is a top plan view illustrating exposure of an original disk to light by the optical disk recording apparatus of FIG. 2;
FIGS. 4A to 4E are signal waveform diagrams illustrating operation of the modulation circuit of FIG. 1;
FIG. 5 is a characteristic diagram illustrating a frequency characteristic of a modulation signal by the modulation circuit of FIG. 1;
FIG. 6 is a top plan view showing, in an enlarged scale, a stamper which is produced by the optical disk recording apparatus of FIG. 2;
FIG. 7 is a top plan view showing an optical disk produced by the optical disk recording apparatus of FIG. 2;
FIG. 8 is a block diagram showing an optical disk playback apparatus for playing back the optical disk of FIG. 7;
FIG. 9 is a top plan view showing an optical pickup of the optical disk playback apparatus of FIG. 8;
FIG. 10 is a characteristic diagram illustrating a frequency characteristic of a tangential push-pull signal in the optical disk playback apparatus of FIG. 8;
FIG. 11 is a block diagram showing a decoding circuit of the optical disk playback apparatus of FIG. 8;
FIG. 12 is a characteristic diagram illustrating a processing result by the decoding circuit of FIG. 11;
FIG. 13 is a characteristic diagram illustrating a relationship between a crosstalk ratio and a normalized track pitch; and
FIGS. 14A and 14B are signal waveform diagrams illustrating intersymbol interference in multi-value recording.

DESCRIPTION OF THE PREFERRED EMBODIMENTS

In the following, preferred embodiments of the present invention are described in detail with reference to the accompanying drawings.

1. Construction of the Embodiment

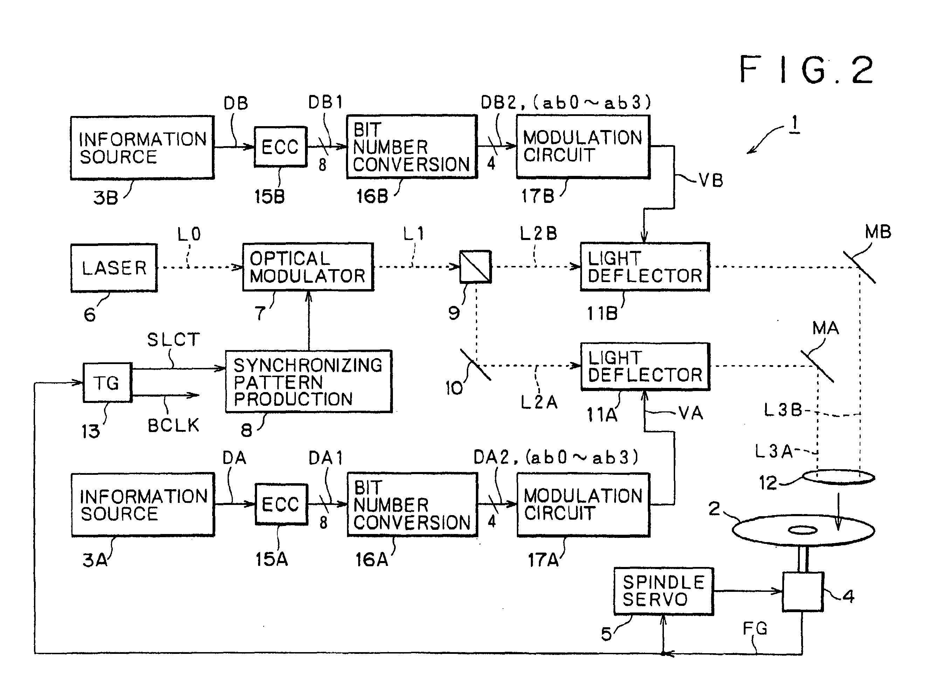

FIG. 2 shows an optical disk recording apparatus to the present invention is applied. The optical disk recording apparatus is generally denoted at 1 and exposes a disk original 2 to light to record user data DA and DB outputted from information sources 3A and 3B onto the disk original 2. In a manufacturing process of an optical disk, the disk original 2 is developed and is then subject to electrocasting to produce a mother disk, and a stamper is produced from the mother disk. Further, in the manufacturing procedure of an optical disk, a disk base plate is produced from the stamper produced in this manner, and reflection films and protective films are formed on the disk base plate to produce an optical disk.

In particular, the optical disk recording apparatus 1 includes a spindle motor 4 which drives the disk original 2 to rotate while a FG signal FG whose signal level rises after each predetermined angle is outputted from a FG signal generation circuit held on the bottom of the spindle motor 4. A spindle servo circuit 5 drives the spindle motor 4 in response to an exposure position of the disk original 2 so that the frequency of the FG signal FG may be a predetermined frequency. Consequently, the disk original 2 is driven to rotate under the condition of a constant linear velocity.

A laser 6 may be a gas laser or the like and emits a laser beam L0 for disk original exposure. An optical modulator 7 is an AOM (Acoustic Optical Modulator) formed from an electro-acoustic optical element or the like and on/off controls the laser beam L0 to be outputted intermittently in response to an output signal of a synchronizing pattern production circuit 8. Consequently, the optical modulator 7 forms an exposure locus in the form of a pit train in a predetermined period on the disk original 2. Thus, a synchronizing pattern, a servo pattern for sample servoing, address information and other information are recorded in the form of the pit train on the disk original 2.

To this end, the synchronizing pattern production circuit 8 raises the signal level of the output signal thereof so as to correspond to the synchronizing pattern, servo pattern and address information in a predetermined timing with reference to a timing signal SLCT.

A beam splitter 9 splits a laser beam L1 outputted from the optical modulator 7 into two rays of light and outputs the two rays of light. A mirror 10 bends the light path of that one of the two laser beams L2A and L2B which has been reflected by the beam splitter 9, that is, the laser beam L2A, and outputs the laser beam L2A along a light path substantially parallel to the remaining laser beam L2B.

A light deflector 11A is an AOD (Acoustic Optical Deflector) formed from an electro-acoustic optical element and displaces the radiation direction of the laser beam L2A to be radiated in response to a modulation signal VA toward a direction corresponding to a radial direction of the disk original 2. Meanwhile, another light deflector 11B similarly is an AOD formed from an electro-acoustic optical element and displaces the radiation direction of the laser beam L2B to be radiated in response to another modulation signal VB toward a direction corresponding to a radial direction of the disk original 2.

The laser beams L3A and L3B obtained in this manner are radiated toward the disk original 2 with light paths thereof bent by mirrors MA and MB, respectively, and are condensed upon the disk original 2 by an objective lens 12. The mirrors MA and MB and the objective lens 12 are successively moved in an outer circumference direction of the disk original 2 in synchronism with rotation of the disk original 2 by a sled mechanism not shown so that the exposure positions with the laser beams L3A and L3B are successively displaced to the outer circumference direction of the disk original 2.

Consequently, in the optical disk recording apparatus 1, exposure loci of the laser beams L3A and L3B are formed spherically on the disk original 2 by the movement of the mirrors MA and MB and the objective lens 12 while the disk original 2 is driven to rotate under the condition of a constant linear velocity. Further, the exposure loci are wobbled in response to the modulation signals VA and VB.

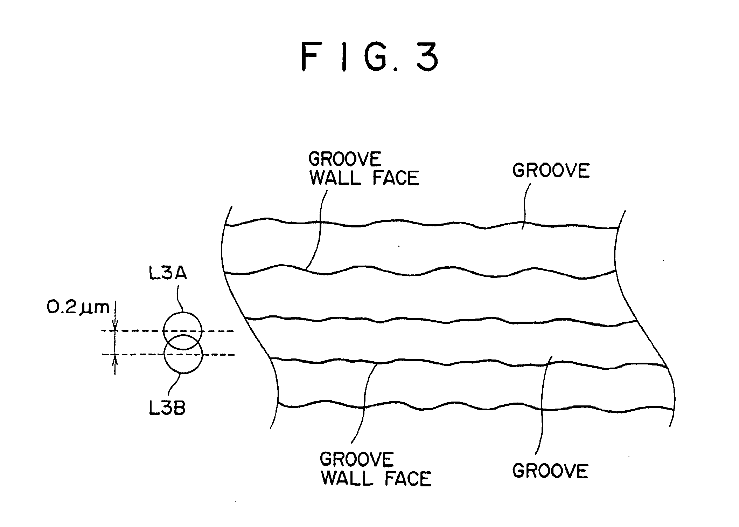

In the optical disk recording apparatus 1, the laser beams L3A and L3B are set so as to be inclined by a predetermined angle with respect to the optical axis of the objective lens 12 such that, when the laser beams L3A and L3B are not deflected by the light deflectors 11A and 11B at all, beam spots by the laser beams L3A and L3B may be offset from each other by a very small distance in a radial direction of the disk original 2 and partly overlap with each other as seen in FIG. 3. It is to be noted that, in the present embodiment, the laser beams L3A and L3B are set so that the offset distance of the beam spots may be 0.2 μm.

Consequently, in the optical disk recording apparatus 1, when the disk original 2 is developed, an elongated projection corresponding to one groove is formed on the irradiation loci of the two laser beams L3A and L3B such that the inner circumference side wall face and the outer circumference side wall face of the groove are allocated to the laser beams L3A and L3B, respectively.

When the inner circumference side wall face and the outer circumference side wall face of the groove are allocated to the laser beams L3A and L3B to expose the disk original 2 in this manner, in the optical disk recording apparatus 1, the laser beams L3A and L3B are deflected in directions corresponding to radial directions of the disk original 2 in response to the modulation signals VA and VB by the light deflectors 11A and 11B, respectively. Consequently, the inner circumference side wall face and the outer circumference side wall face formed in this manner are wobbled in the radial directions of the disk original 2 independently of each other in response to the modulation signals VA and VB, respectively.

In the optical disk recording apparatus 1, the modulation signals VA and VB are produced so that the signal levels thereof may vary continuously in response to the user data DA and DB outputted from the information sources 3A and 3B, respectively. Consequently, the user data DA and DB are recorded as wobbling of the groove wall faces which are continuous displacements of the inner circumference side wall face and the outer circumference side wall face of the groove, respectively. Consequently, in the optical disk recording apparatus 1, appearance of such bit errors caused by distortion, noise and so forth as appearing when desired data are recorded in the form of a pit train as in a conventional compact disk is prevented.

In particular, in the optical disk recording apparatus 1, a timing generator (TG) 13 produces and outputs various reference signals, which provide a reference for operation of the optical disk recording apparatus 1, with reference to the FG signal FG. The timing generator 13 produces a channel clock in its reference signal production process and divides the channel clock to produce a data transfer clock BCLK, a timing signal SLCT and so forth to be outputted.

It is to be noted that the data transfer clock BCLK here is a clock for transfer reference for transferring data to be recorded, and in the optical disk recording apparatus, it is outputted in a period in which the laser beams L3A and L3B scan the disk original 2 over a predetermined distance. The timing signal SLCT is used to record the synchronizing pattern, servo pattern, address information and so forth described above onto the disk original 2 and is produced such that the logic level thereof changes over for a fixed period each time the laser beams L3A and L3B scan the disk original 2 over the predetermined distance.

The information sources 3A and 3B sequentially output predetermined user data DA and DB with reference to a pertaining reference signal outputted from the timing generator 13 at a timing synchronized with data processing by error correcting code generation circuits (ECC) 15A and 15B in the succeeding stage.

The error correcting code generation circuits 15A and 15B receive the output data DA and DB of the information sources 3A and 3B, respectively, add error correcting codes (ECC) to the user data DA and DB, interleave the user data DA and DB and output interleaved data. At this time, the error correcting code generation circuits 15A and 15B output respective processing results in the form of 8-bit parallel data DA1 and DB1, respectively. Further, the error correcting code generation circuits 15A and 15B output processing results suitable for data processing by bit number conversion circuits 16A and 16B in the following stage, respectively.

The bit number conversion circuits 16A and 16B convert the unit bit number of the 8-bit parallel data DA1 and DB1 outputted from the error correcting code generation circuits 15A and 15B and output 4-bit parallel data DA2 (ab0 to ab3) and DB2 (bb0 to bb3), respectively.

Modulation circuits 17A and 17B modulate the output data DA2 (ab0 to ab3) and DB2 (bb0 to bb3) of the bit number conversion circuits 16A and 16B and output multi-value modulation signals VA and VB, respectively. Consequently, in the optical disk recording apparatus 1, the groove wall faces are displaced with the modulation signals VA and VB to record two series of user data in multi-values as wobbling of the opposite side wall faces of the groove.

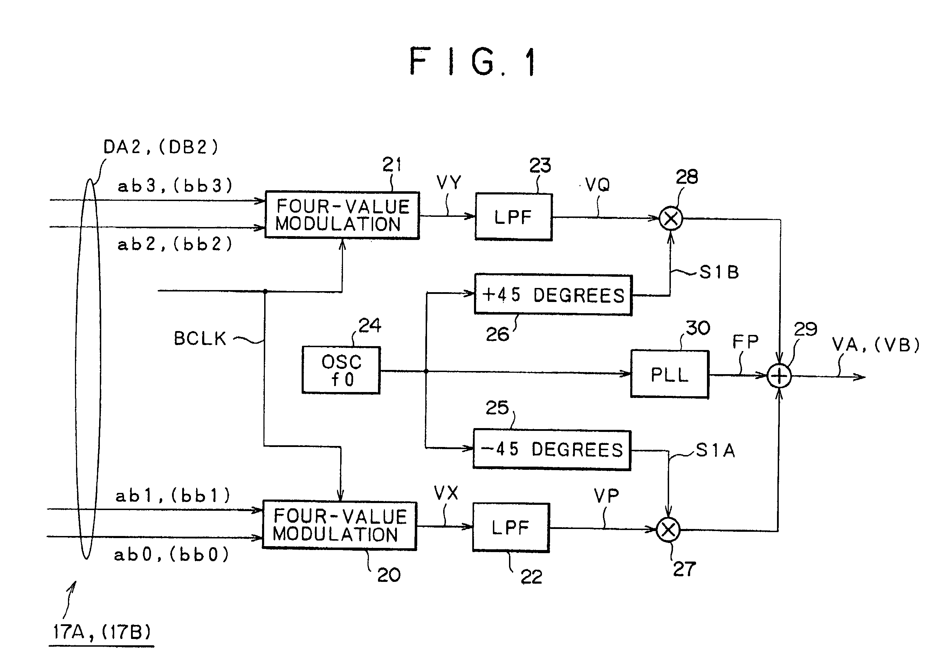

FIG. 1 shows the modulation circuit 17A. It is to be noted that the modulation circuit 17B is formed in the same construction as that of the modulation circuit 17A except that the data of an object of processing and the output system for the modulation signal are different. Therefore, corresponding signals are indicated by reference characters within blankets and description of the modulation circuit 17B is omitted to avoid redundancy.

Referring to FIG. 1, the modulation circuit 17A includes a four-value modulation circuit 20 which receives data of the low order 2 bits ab0 and abl of the 4-bit parallel data DA2 (ab0 to ab3) outputted from the bit number conversion circuit 16A and produces a four-value modulation signal VX whose value varies in accordance with the data values of the low order side 2 bits ab0 and ab1.

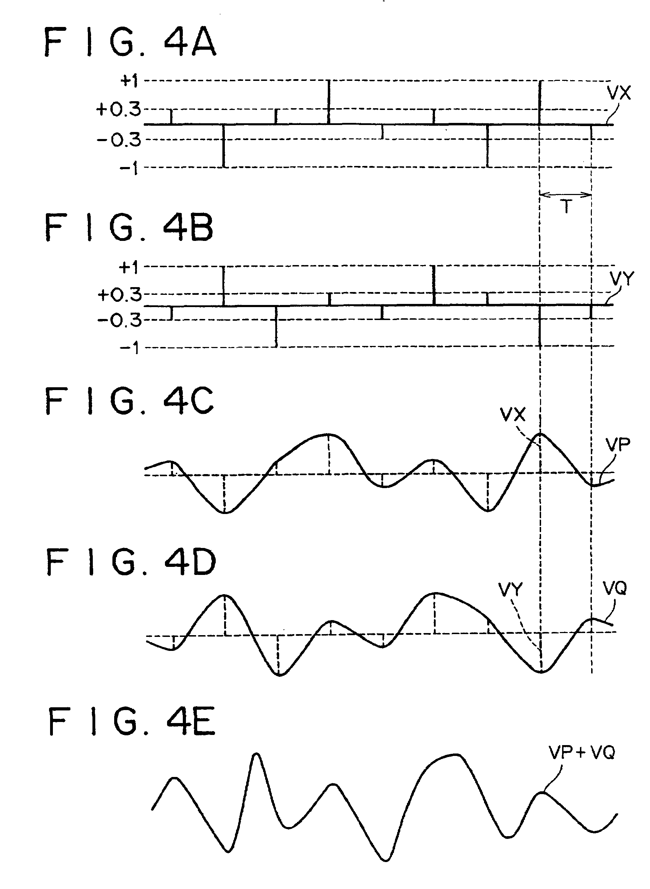

Here, as shown in FIG. 4A, the four-value modulation circuit 20 produces the modulation signal VX such that the signal level may vary like an impulse in response to the data values of the lower side 2 bits ab0 and ab1 in a repetition period T of the data DA2 and besides the signal level may vary around the center at the 0 level. Consequently, the modulation signal VX is formed such that it may exhibit a variation to one of the values +1, +0.3, -0.3 and -1 from the 0 level in the period T. Here, a broad frequency band is used in the impulse response, and therefore, the four-value modulation circuit 20 produces the multi-value modulation signal VX according to a broad frequency band.

Meanwhile, another four-value modulation circuit 21 produces a four-value modulation signal VY similarly to the four-value modulation circuit 20 from the data of the high order side 2 bits ab2 and ab3 of the 4-bit parallel data DA2 (ab0 to ab3) as seen in FIG. 4B.

Referring back to FIG. 1, a low-pass filter (LPF) 22 band limits the modulation signal VX produced with such a broad frequency band and outputs a resulting signal. Here, the low-pass filter (LPF) 22 band limits the modulation signal VX so that intersymbol interference may not occur, that is, each instantaneous value of the modulation signal VX which rises like an impulse may be reflected correctly on the band-limited signal VP obtained by the band limitation as seen in FIG. 4C. In other words, the modulation signal VX is band-limited so that, when the band-limited signal VP obtained by band limitation in such a manner as described above is sampled at a timing corresponding to a rising edge of the signal level like an impulse of the modulation signal VX, the rising edge of the pulse-like signal level of the modulation signal VX may be reproduced substantially correctly.

Based on such a premise as just described, the low-pass filter 22 band limits the modulation signal VX so that the modulation signal VX may be band-limited sufficiently to a predetermined frequency band Fb, that is, even if the band-limited signal VP obtained by the band limitation is spectrum analyzed, the band-limited signal VP may be suppressed sufficiently in a frequency region higher than the frequency Fb. Here, the frequency band Fb is approximately one half the frequency band which remains when a pilot signal FP which is hereinafter described is placed in the frequency band before the band-limited signal VP obtained in such a manner as described above is played back by the playback system. Consequently, in the optical disk recording apparatus 1, the user data DA and DB are recorded in a high density sufficiently making use of the frequency band of the recording and playback systems.

More particularly, in the optical disk recording apparatus 1, a low-pass filter having, for example, a raised cosine characteristic is applied as the low-pass filter 22.

A low-pass filter (LPF) 23 has the same construction as that of the low-pass filter 22, and band limits the modulation signal VY and outputs a band-limited signal VQ.

An oscillation circuit (OSC) 24 produces and outputs a carrier signal of a predetermined frequency f0. It is to be noted that the frequency f0 of the carrier signal is set so as to satisfy the following expression (1) so that foldover distortion may not appear by multiplication of multiplication circuits 27 and 28 which are hereinafter described:

$$f0 > Fb \qquad (1)$$

A -45 degree phase shift circuit (-45 degrees) 25 delays the carrier signal by 45 degrees and outputs a resulting signal while a +45 degree phase shift circuit (+45 degrees) 26 outputs the carrier signal with a leading phase of 45 degrees. Consequently, the -45 degree phase shift circuit 25 and the +45 degree phase shift circuit 26 produce and output a set of carrier signals S1A and S1B orthogonal to each other as given by the following expressions (2) wherein A is a constant, and t is the time:

$$S1 = A \cdot \sin (2 \pi \cdot f0 \cdot t)$$

$$S2 = A \cdot \cos (2 \pi \cdot f0 \cdot t) \qquad (2)$$

The multiplication circuit 27 multiplies the carrier signal S1A outputted from the -45 degree phase shift circuit 25 by the band-limited signal VP outputted from the low-pass filter 22 to frequency convert the band-limited signal VP so that the base band frequency of the band-limited signal VP may be equal to the frequency f0 of the carrier signal.

The multiplication circuit 28 multiplies the carrier signal S1B outputted from the +45 degree phase shift circuit 26 by the band-limited signal VQ outputted from the low-pass filter 23 to frequency convert the band-limited signal VQ so that the base band frequency of the band-limited signal VQ may be equal to the frequency f0 of the carrier signal.

An addition circuit 29 adds multiplication signals outputted from the multiplication circuits 27 and 28 and outputs a resulting signal. Consequently, the multiplication circuits 27 and 28 and the addition circuit 29 construct a quadrature modulation circuit and multiplex the two sets of band-limited signals VP and VQ as schematically shown in FIG. 4E and output a resulting signal.

At this time, the addition circuit 29 adds the pilot signal FP outputted from a PLL (Phase Locked Loop) circuit 30 to the multiplexed signal of the band-limited signals VP and VQ and outputs a resulting signal as a modulation signal VA.

The PLL circuit 30 produces a pilot signal FP of a predetermined frequency with reference to the carrier signal outputted from the oscillation circuit 24. The frequency Fp of the pilot signal FP is set so as to satisfy one of the following relational expressions (3) so that it may be positioned on the higher frequency side with respect to the band-limited signals VP and VQ obtained by the frequency conversion by the multiplication circuits 27 and 28 and it may not have an influence such as cross modulation on the band-limited signals VP and VQ:

$$Fp > Fb + f0$$

$$Fp < f0 - Fb \qquad (3)$$

The modulation circuit 17A produces and outputs a modulation signal VA represented by the following expression (4) where A and B are predetermined constants:

$$VA = A \cdot Vp \cdot \sin(2\pi \cdot f0 \cdot t)$$

$$+ A \cdot Vq \cdot \cos (2\pi \cdot f0 \cdot t)$$

$$+ B \cdot \sin (2\pi \cdot Fp \cdot t) \qquad (4)$$

The modulation signals VA and VB produced in such a manner as described above include no dc component because they are produced by frequency conversion of the band-limited signals VP and VQ by the multiplication circuits 27 and 28. Further, the band-limited signals VP and VQ are produced so that they may be band-limited so as to be sufficiently suited for the frequency band of the recording and playback systems and besides intersymbol interference may not occur.

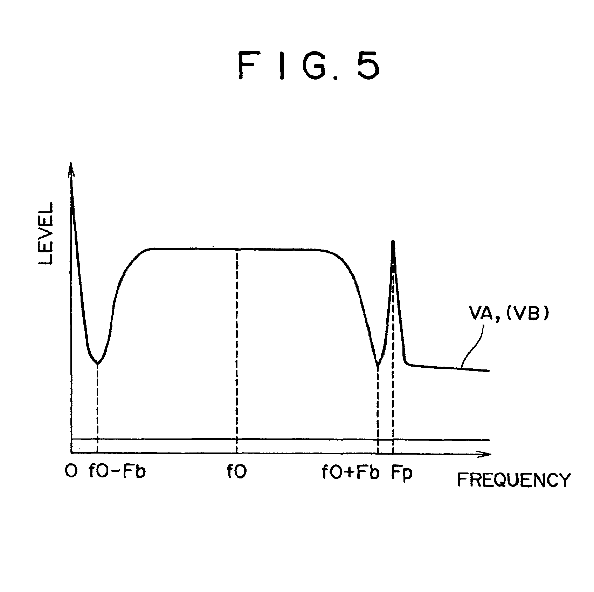

FIG. 5 is a characteristic diagram illustrating a manner wherein the modulation signal VA produced in such a manner as described above is actually observed using a spectrum analyzer. In the characteristic diagram, since the level in the proximity of the origin is low, it can be seen that the dc component of the modulation signal VA is suppressed. It is to be noted that the carrier signal f0 was set to the frequency of 1.6 MHz, the frequency band Fb to approximately 1.3 MHz, and the pilot signal frequency Fp to the frequency of 3.06 MHz. Further, it can be seen that the modulation signal VA has a low level also in a frequency higher than the frequency of 2.9 MHz and the frequency band is limited sufficiently.

Thus, in the optical disk recording apparatus 1, the condensed positions of the laser beams L3A and L3B are displaced in radial directions of the disk original 2 in response to the modulation signals VA and VB produced in such a manner as described above to expose the disk original 2. Then, the disk original 2 is developed to produce a stamper and an optical disk is produced from the stamper. Consequently, in the present optical disk recording apparatus 1, the two series of user data DA and DB are recorded as wobbling of the inner circumference side wall face of the groove and the wobbling of the outer circumference side wall face of the groove independently of each other, respectively.

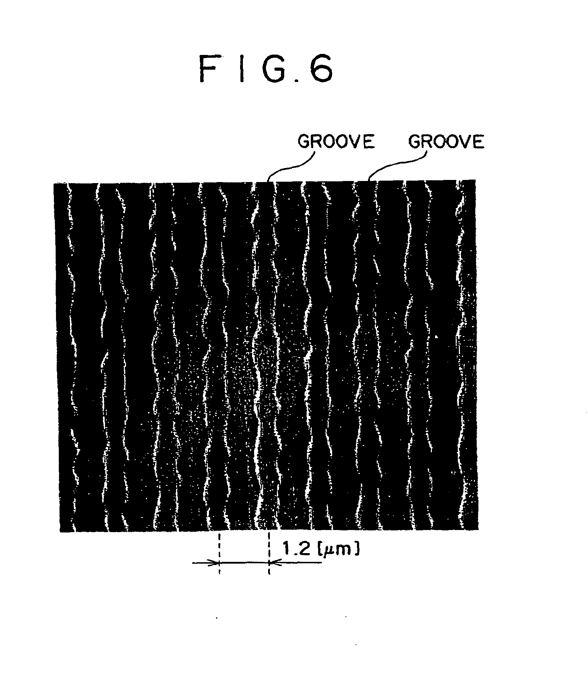

FIG. 6 shown, in a plan view, a stamper produced in such a manner as described above when it is observed using a scanning electronic microscope. In FIG. 6, the average distance between adjacent grooves is 1.2 μm. Accordingly, the user data DA and DB are recorded at a distance of 0.6 μm.

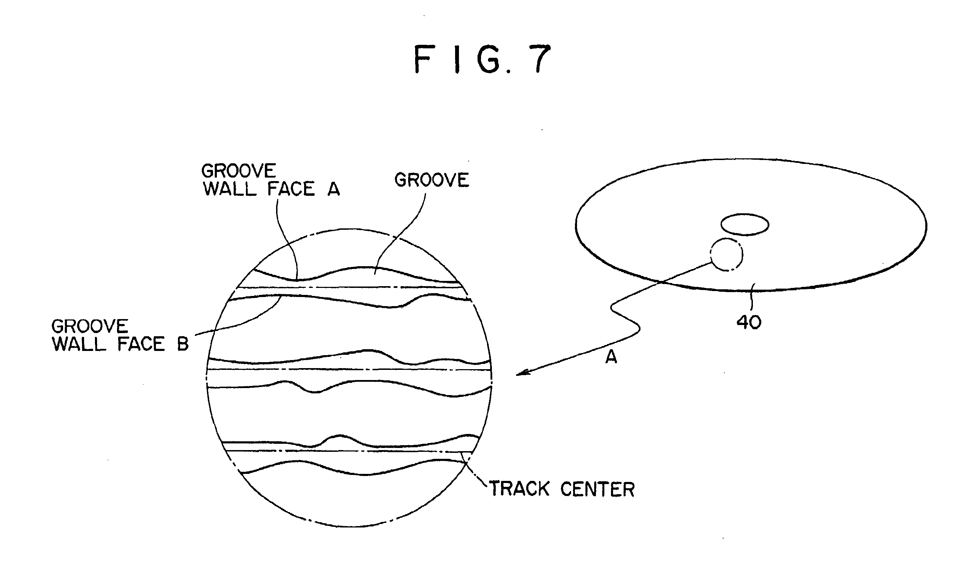

FIG. 7 schematically shows an optical disk produced from the stamper. Consequently, on the optical disk 40, a groove is formed spirally from the inner circumference side toward the outer circumference side, and two series of user data DA and DB are recorded as wobbling of the inner circumference side wall face of the groove and wobbling of the outer circumference side wall face of the groove.

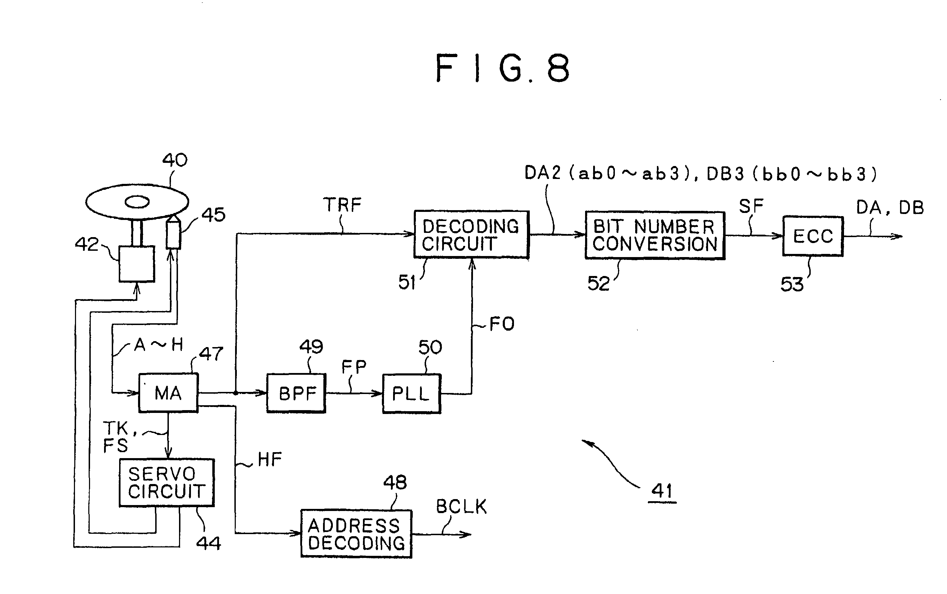

FIG. 8 shows an optical disk playback apparatus for playing back the optical disk 40. Referring to FIG. 8, the optical disk playback apparatus is generally denoted at 41 and includes a spindle motor 42 which drives the optical disk 40 to rotate under the condition of a constant linear velocity with reference to a servo pattern recorded on the optical disk 40 under the control of a servo circuit 44.

An optical pickup 45 irradiates a laser beam upon the optical disk 40 and outputs light reception results A to H of returning light of the laser beam. In particular, the optical pickup 45 emits a laser beam of a predetermined polarization plane from a laser diode not shown and divides the laser beam into a main beam and side beams by means of a diffraction grating not shown. The optical pickup 45 condenses the main beam and the side beams upon the optical disk 40 by means of an objective lens not shown. The optical system of the optical pickup 45 is formed so that the condensed positions of the main beam and the side beams may be juxtaposed with each other in an inclined relationship by a small angle with respect to a circumference tangential direction of the optical disk 40.

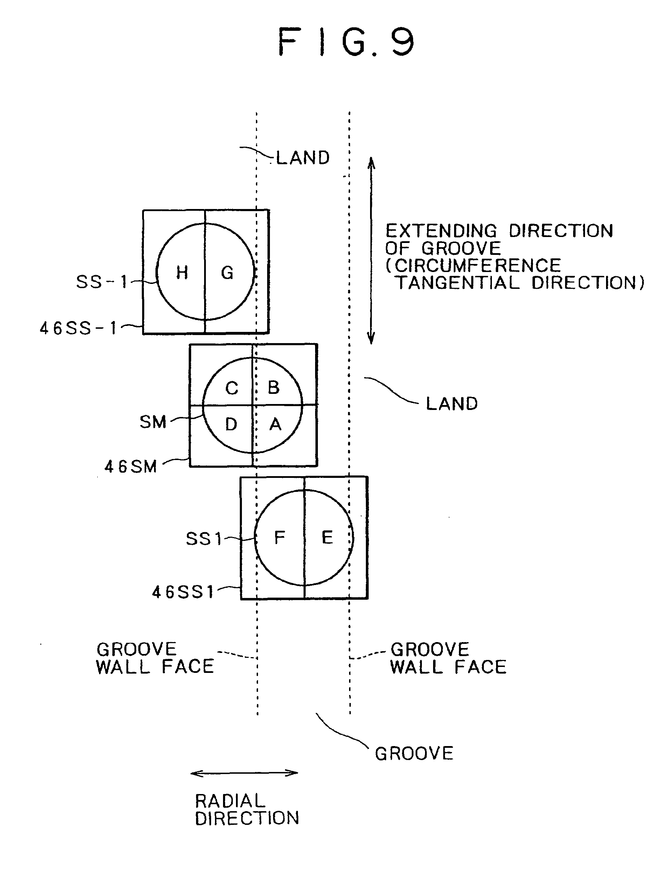

In particular, as shown in FIG. 9, the optical system of the optical pickup 45 is constructed such that, when the beam spot SM formed from the main beam is condensed upon one of the groove wall faces, beam spots SS1 and SS-1 formed from the + primary and - primary side beams may be condensed on the inner and outer sides of the wall face.

The optical pickup 45 receives returning light of the main beam by means of a four-piece detector 46SM whose light receiving face is divided in a radial direction and a circumference tangential direction. Meanwhile, the side beams are received by two-piece detectors 46SS1 and 46SS-1 each having a light receiving face divided in a radial direction, that is, along a circumferential line. The optical pickup 45 outputs light reception results by the light receiving faces A to H of the light receiving elements.

Referring back to FIG. 8, a matrix arithmetic operation circuit (MA) 47 performs current to voltage conversion processing for the light reception results A to H of the light receiving faces and then executes arithmetic operation processing in accordance with the following expressions (5) to produce a playback signal HF whose signal level varies in response to presence or absence of a groove and a pit, a tangential push-pull signal TRF whose signal level varies in response to the wobbling of a groove wall face, a tracking error signal TK whose signal level varies in response to a tracking error amount with reference to a groove wall face, and a focusing error signal FS whose signal level varies in response to a focusing error amount. It is to be noted that, in the expressions (5) given below, the light reception results of the light receiving faces are represented by reference characters A to H applied to the respective light receiving faces.

$$TK = (E - F) - (G - H)$$

$$HF = A + B + C + D$$

$$TRF = A - B - C + D$$

$$FS = A - B + C - D \qquad (5)$$

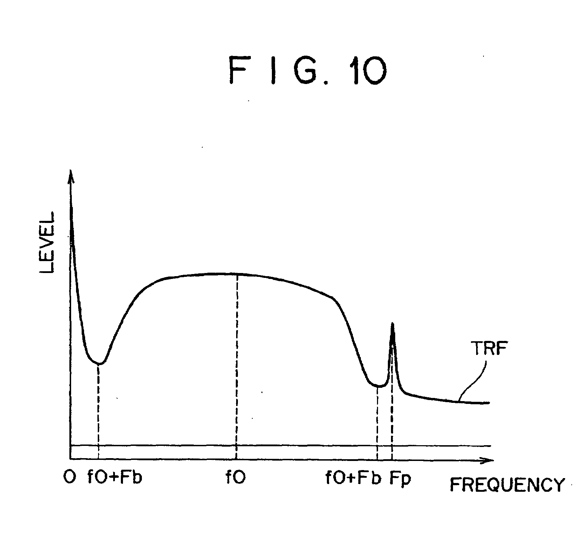

FIG. 10 is a characteristic diagram illustrating a frequency characteristic of the tangential push-pull signal TRF obtained by the arithmetic operation processing in contrast with FIG. 5. It can be seen that the tangential push-pull- signal TRF in the optical disk playback apparatus 41 is played back with a frequency characteristic substantially equal to those of the modulation signals VA and VB upon recording although some deterioration is observed on the higher frequency side. Thus, the optical pickup 45 and the matrix arithmetic operation circuit 47 form detection means for detecting a displacement of a groove wall face with respect to the track center and outputting a detection result with regard to the tangential push-pull signal TRF.

The servo circuit 44 moves the objective lens of the optical pickup 45 so that the signal levels of the tracking error signal TK and the focusing error signal FS may be equal to the 0 level thereby to perform tracking control and focusing control. At this time, the servo circuit 44 reverses the polarity of the tracking error signal TK to effect tracking control under the control of a controller not shown thereby to change over a tracking control target between the inner circumference side wall face and the outer circumference side wall face of the groove. Further, the servo circuit 44 drives the spindle motor 42 under the condition of a constant linear velocity based on a detection result of the servo pattern detected by an address decoding circuit 48. Furthermore, the servo circuit 44 drives a sled mechanism not shown in accordance with an instruction from the controller not shown to move the optical pickup 45 in a radial direction of the optical disk 40 to execute seeking processing.

The address decoding circuit 48 receives the playback signal HF and binary digitizes and processes the playback signal HF to detect a synchronizing pattern, a servo pattern, address information and so forth recorded intermittently in the form of a pit train on the optical disk 40. Further, the optical disk 40 notifies the servo circuit 44 of a detection result of the servo pattern. Furthermore, the address decoding circuit 48 similarly notifies the controller not shown of a detection result of the synchronizing pattern and a detection result of the address information and restores and outputs the data transfer clock BCLK produced upon recording from the detection results.

A band-pass filter (BPF) 49 extracts the pilot signal FP from the tangential push-pull signal TRF and outputs the pilot signal FP. A PLL circuit 50 reproduces a carrier signal F0 used upon recording with reference to the pilot signal FP outputted from the band-pass filter 49.

A decoding circuit 51 processes the tangential push-pull signal TRF with reference to the carrier signal F0 to decode the 4-bit parallel data DA2 (ab0 to ab3) or DB2 (bb0 to bb3) produced upon recording and outputs the data DA2 or DB2. A bit number conversion circuit 52 receives the 4-bit parallel data DA2 or DB2 outputted from the decoding circuit 51, converts the bit unit of it to 8 bits and outputs resulting data. Thus, the decoding circuit 51 forms decoding means for processing a displacement detection result of a groove wall face detected by the optical pickup 45 and the matrix arithmetic operation circuit 47 to reproduce user data with three or more multi-values.

An error correction circuit (ECC) 53 performs error correction processing for the output data SF of the bit number conversion circuit 52, demodulates the user data DA and DB and outputs the resulting data.

Consequently, the optical disk playback apparatus 41 selectively reproduces user data DA or DB from the inner circumference side wall face or the outer circumference side wall face of the groove formed on the optical disk 40. Accordingly, for example, where the user data DA or DB are audio data, the audio signal recorded on the optical disk 40 can be enjoyed by performing digital to analog conversion processing of the user data DA or DB and driving a speaker with the analog data.

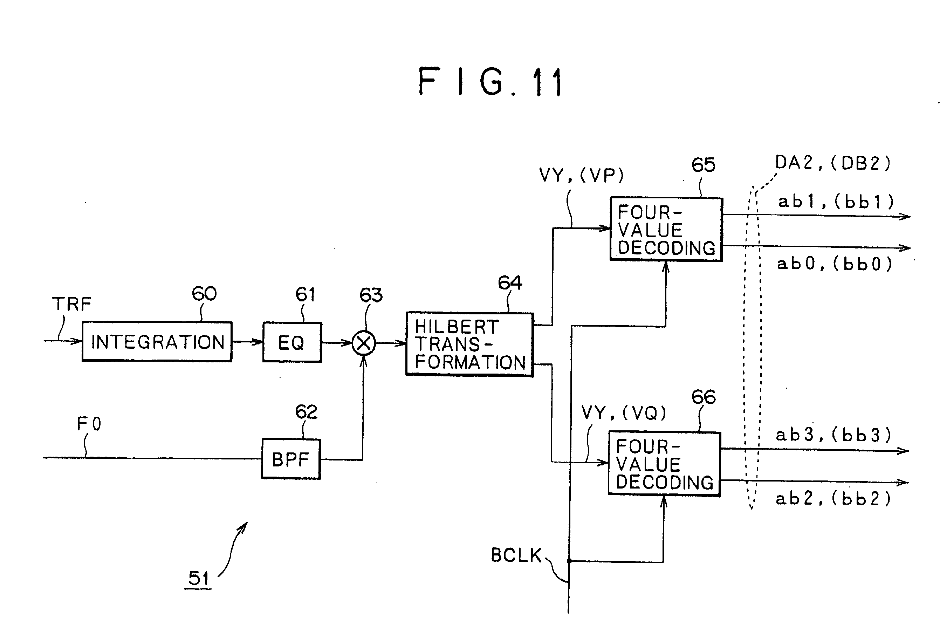

FIG. 11 particularly shows the decoding circuit 51. In the optical disk playback apparatus 41, the tangential push-pull signal TRF is detected by the optical system which forms a differential system. Therefore, an integration circuit 60 of the decoding circuit 51 integrates the tangential push-pull signal TRF and outputs a resulting signal with a frequency characteristic corresponding to the original modulation signals VA and VB.

An equalizer circuit (EQ) 61 corrects the frequency characteristic of the tangential push-pull signal TRF which still remains even after such processing and outputs a resulting signal. A band-pass filter (BPF) 62 band limits the carrier signal F0 outputted from the PLL circuit 59 and outputs a resulting signal. A multiplication circuit 63 multiplies the carrier signal outputted from the band-pass filter 62 and the tangential push-pull signal TRF outputted form the equalizer circuit 61 and outputs a resulting signal. Consequently, the decoding circuit 51 frequency converts the tangential push-pull signal TRF to return the frequency band of the tangential push-pull signal TRF to its original frequency band opposite to those of the multiplication circuits 27 and 28 upon recording.

A Hilbert transformer 64 is formed from a Fourier transformer or the like and frequency analyzes an output signal of the multiplication circuit 63, separates the output signal of the multiplication circuit 63 into a real part UX and an imaginary part UY based on a result of the analysis and outputs the real part UX and the imaginary part UY. Consequently, the multiplication circuit 63 and the Hilbert transformer 64 decode the quadrature modulated band-limited signals VP and VQ. Thus, the multiplication circuit 63 and the Hilbert transformer 64 form demodulation means for a quadrature modulation signal.

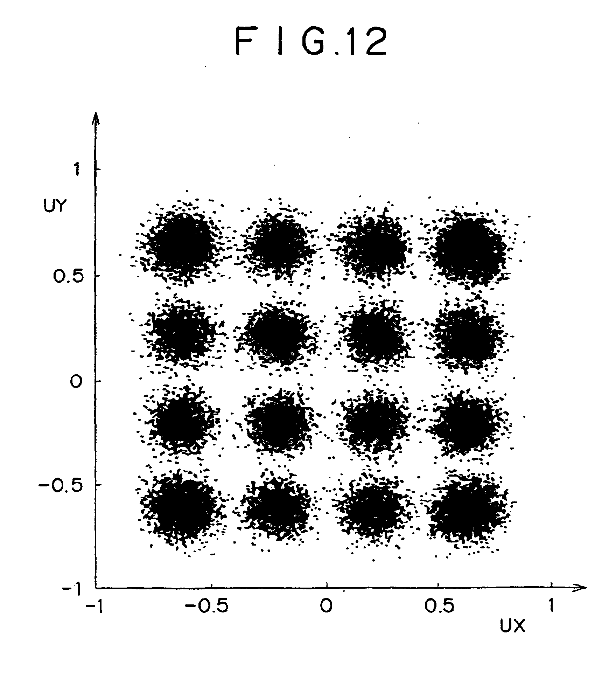

FIG. 12 is a characteristic diagram illustrating a result of sampling of the real part UX and the imaginary part UY reproduced in such a manner as described above with the data transfer clock BCLK. It is to be noted that the characteristic illustrated in FIG. 12 represents a result when four-value information is recorded in the density equal to 1.5 times that of a DVD to produce an optical disk 40 and the optical disk 40 is played back by an optical pickup having a resolving power equal to that used for a DVD. From FIG. 12, it can be seen that, even where four-value data are recorded in the density of 1.5 times when compared with that of a DVD, they can be decoded sufficiently.

Referring back to FIG. 11, a four-value decoding circuit 65 samples the real part UX outputted from the Hilbert transformer 64 with the data transfer clock BCLK and discriminates a sampling result with a predetermined threshold value to decode the low order 2-bit data ab0 and abl (or bb0 and bbl) of the 4-bit parallel data DA2 (or DB2). Another four-value decoding circuit 66 similarly samples the imaginary part UY outputted from the Hilbert transformer 64 with the data transfer clock BCLK and discriminates a sampling result to decode the high order 2-bit data ab2 and ab3 (or bb2 and bb3) of the 4-bit parallel data DA2 (or DB2).

2. Operation of the Embodiment

In the optical disk recording apparatus 1 and the optical disk playback apparatus 41 having the construction described above, the data DA (FIG. 2) outputted from the information source 3A are subject to addition of error correcting codes and interleave processing by the error correcting code generation circuit 15A and then are inputted as 8-bit parallel data to the bit number conversion circuit 16A. The 8-bit parallel data are converted into 4-bit parallel data by the bit number conversion circuit 16A, and the 4-bit parallel data are inputted to the modulation circuit 17A (FIG. 2).

In the modulation circuit 17A (FIGS. 1 and 2), the low order side 2 bits and the high order side 2 bits of the data DA2 are inputted to the four-value modulation circuits 20 and 21, respectively, and four-value modulation signals VX and VY whose signal levels vary like an impulse and vary around the center provided by the 0 level are produced in response to the data values of 2 bits by the four-value modulation circuits 20 and 21, respectively. Consequently, the low order side data and the high order side data are converted into data string signals of a broad frequency band whose values are changed over among three or more values in response to the values of the data.

The modulation signals VX and VY are converted into band-limited signals VP and VQ with the dc components and high frequency components thereof suppressed by the succeeding low-pass filters 22 and 23 within a range within which no intersymbol interference occurs between adjacent data. Further, the band-limited signals VP and VQ are multiplied respectively by the orthogonal carrier signals S1A and S1B set to a frequency greater than 1/2 the band-limited frequency band by the multiplication circuit 28 to convert the frequencies thereof. Then, the frequency converted band-limited signals VP and VQ are added by the addition circuit 29 so that the multi-valued signals are multiplexed further by quadrature modulation to produce a modulation signal VA.

Also the data DB outputted form the other information source 3B are processed similarly so that another modulation signal VB is produced.

In the optical disk recording apparatus 1, the pilot signal FP which is a reference for production of the carrier signals S1A and S1B is further added to produce the modulation signals VA and VB (FIG. 5).

In the optical disk recording apparatus 1 (FIG. 2), the radiation directions of the laser beams L3A and L3B are displaced in directions transverse to a track to be formed on the disk original 2 which are radial directions of the disk original 2 so that the exposure loci of the disk original 2 are formed such that they are wobbled in response to the signal level of the modulation signal VA. Further, the exposure loci of the disk original 2 are formed such that the corresponding groove wall faces on an optical disk produced by processing of the disk original 2 may be wobbled in accordance with the modulation signals VA and VB.

In such recording by the wobbling of the groove wall faces, data of 1 bit is allocated to a groove wall face over a predetermined length and recorded as a synthetic variation of the groove of the length. In particular, data of 1 bit is recorded such that it is distributed to one period of the data transfer clock BCLK corresponding to the length of the groove. In contrast, in a conventional optical disk, data of 1 bit are successively recorded and played back at edge timings provided by pits or marks.

Consequently, in the optical disk recording apparatus 1 and the optical disk playback apparatus 41, a playback result of the optical disk 40 produced from the disk original 2 exhibits reduction of the influence of instantaneous noise and effective augmentation of the SNR (signal to noise ratio) and besides can effectively prevent bit errors by noise to sufficiently assure a margin for high density recording.

At this time, in the optical disk recording apparatus 1, the optical disk 40 produced from the disk original 2 by irradiating a laser beam under the condition of a constant linear velocity to expose the disk original 2 can make the recording densities on inner and outer circumferences fixed and can augment the recording density as much.

Upon such recording, in the optical disk recording apparatus 1, the modulation circuits 17A and 17B suppress the dc components and high frequency components of data string signals of a broad frequency band, whose values are changed over among four values in response to the values of data of the low order side 2 bits and the high order side 2 bits, respectively, within a range within which intersymbol interference does not occur between adjacent data to produce band-limited signals and produce the modulation signals VA and VB from the band-limited signals. Consequently, multi-value recording can be achieved while increase of the error rate by intersymbol interference and increase of the error rate by a variation of the dc level in a playback result can be prevented effectively.

Further, since the band-limited signals produced in such a manner as described above are frequency converted and the frequency of the carrier signal is set to a frequency equal to or higher than one half the band-limited frequency band, the influence of foldover distortion can be prevented effectively. Consequently, waveform deterioration of a playback signal upon playback can be prevented. Accordingly, data recorded in a high density can be played back correctly.

Further, since the modulation circuits 17A and 17B multiplex two series of band-limited signals by quadrature modulation so that wobbling of the groove wall faces is formed, the recording density can be augmented significantly when compared with an alternative case wherein the groove wall faces are displaced with a mere single series of band-limited signal.

Upon formation of wobbling of the groove wall faces, in the optical disk recording apparatus 1, the inner circumference side wall face and the outer circumference side wall face of the groove are displaced with the data DA and DB which are independent of each other so that the separate data DA and DB are recorded on the inner circumference side wall face and the outer circumference side wall face (FIGS. 6 and 7). Accordingly, when compared with an alternative case wherein desired data are recorded merely as wobbling of a groove, and when further compared with another alternative case wherein desired data are recorded merely as wobbling of one of two groove walls, desired data can be recorded in a higher density.

In this instance, if two series of audio data are allocated as such data DA and DB, then it is also possible to selectively enjoy music based on desired audio data from the two series of audio data.

In the optical disk playback apparatus 41 (FIGS. 8 and 9), a laser beam is irradiated from the optical pickup 45 upon the optical disk 40 and returning light is received, and a result of the light reception is processed by the matrix arithmetic operation circuit 47 and the wobbling of the groove wall face on the inner circumference side or the outer circumference side is detected from the tangential push-pull signal TRF. Further, a result of this detection is processed by the decoding circuit 51 to reproduce the 4-bit parallel data DA2 and DB2, and the data DA2 and DB2 are processed by the bit number conversion circuit 52 and the error correction circuit 53 to reproduce the original data DA and DB.

At this time, the tangential push-pull signal TRF detected by the matrix arithmetic operation circuit 47 corresponds to a differential signal of the modulation signal VA or VB upon recording (FIG. 10). Here, since the modulation signal VA or VB is produced as a band-limited signal by suppressing the dc component and high frequency components of a data string signal of a broad frequency band, whose value changes over among four values, within a range within which intersymbol interference does not occur between adjacent data, the decoding circuit 51 can process the modulation signal VA or VB to decode the original data while preventing an increase of the error rate by intersymbol interference and hence an increase of the error rate by a variation of the dc level.

In particular, the tangential push-pull signal TRF is corrected in terms of the differential characteristic of the playback system by the integration circuit 60 in the decoding circuit 51 (FIG. 11) and then corrected in terms of the frequency characteristic by the succeeding equalizer circuit 61 in the decoding circuit 51, whereafter it is multiplied by the carrier signal F0 so that it is converted into a base band signal by the succeeding multiplication circuit 63 in the decoding circuit 51. Thereafter, the tangential push-pull signal TRF is separated into a real part UX and an imaginary part UY by the Hilbert transformer 64 so that the original band-limited signals VX and VY are reproduced. Consequently, the band-limited signals VX and VY of the tangential push-pull signal TRF are demodulated as the real part UX and the imaginary part UY by the quadrature demodulation circuit composed of the multiplication circuit 63 and the Hilbert transformer 64. Then, the real part UX and the imaginary part UY are discriminated by the four-value decoding circuits 65 and 66 so that data of the low order side 2 bits and the high order side 2 bits are decoded.

## 3. Effects of the Embodiment

According to the optical disk recording apparatus 1 having the construction described above, since the dc component and high frequency components of a multi-value signal are suppressed within a range within which intersymbol interference does not occur between adjacent data to produce a modulation signal and the modulation signal is recorded as a displacement of a groove wall face, multi-value recording can be achieved in a high density while an increase of the error rate is prevented effectively.

At this time, since the multi-value signal is frequency converted with a carrier signal having a frequency set equal to or higher than a band-limited frequency band. to produce the modulation signal, appearance of foldover distortion can be prevented, and an increase of the error rate can be further prevented as much.

Further, since the multi-value signal produced in this manner is quadrature amplitude modulated to produce the modulation signal, two series of multi-value signals can be recorded, and the recording density can be augmented as much.

Further, at this time, since the inner circumference side wall face and the outer circumference side wall face of the groove are displaced with data independent of each other to record the separate data on the inner circumference side wall face and the outer circumference side wall face, the recording density can be augmented.

## 4. Second Embodiment

Such a playback signal of an optical disk playback apparatus.which is detected through a predetermined optical system as described above has a resolving power which depends upon a beam diameter of a laser spot which in turn depends upon the wavelength $\lambda$ of the laser beam. Meanwhile, in a conventional system wherein various data recorded in the form of, for example, a pit train or a mark train are played back, the minimum distance between pits or marks in an extending direction of a track is set based on such a resolving power as described above. Also the track pitch in a direction transverse to tracks is set similarly.

In particular, if the minimum distance between pits or marks is set smaller than the resolving power, then intersymbol interference occurs between successive pits or marks and makes correct playback of data difficult. Similarly, if the track pitch is set smaller than the resolving power, then it is difficult to play back data correctly due to crosstalk between adjacent tracks.

Specifically, for example, in a conventional compact disk player, the track pitch is set to 1.6 $\mu$m because the numerical aperture NA is selected to 0.45 and the wavelength $\lambda$ of the laser beam is selected to 830 nm. Similarly, the track pitch of a DVD is set to 0.74 $\mu$m because the numerical aperture NA is selected to 0.6 and the wavelength $\lambda$ of the laser beam is selected to 650 nm.

The optical disk playback apparatus 41 described hereinabove can suppress intersymbol interference between adjacent data in regard to that one of such limitations arising from an optical system as described just above which relates to the extending direction of a track. However, it is considered that the optical disk recording apparatus 1 does not clear the limitation in regard to the track pitch similarly to an optical disk playback apparatus having a conventional construction.

This is examined with reference to a track pitch normalized with a resolving power. In particular, the resolving power increases in proportion to the diameter of the beam spot which increases in proportion to the wavelength $\lambda$ of the laser beam and in inverse proportion to the numerical aperture NA. Therefore, in the present embodiment, the track pitch/ (wavelength/numerical aperture) is defined as normalized track pitch.

Conventional systems are discriminated from the normalized track pitch. In the case of a compact disk, the normalized track pitch is 0.89, and in the case of a DVD, the normalized track pitch is 0.68. Thus, in such conventional systems, the normalized track pitch is selected to 0.7 to 0.9 so that a sufficient suppression ratio is assured for crosstalk between adjacent tracks.

However, while data where such a compact disk and a DVD as described above is used are decoded based on a playback signal (which corresponds to the playback signal HF of FIG. 8) produced by integrating a total amount of returning light by means of a detector, the optical disk playback apparatus 41 described hereinabove is different in that it decodes data based on a playback signal (the playback signal TRF of FIG. 8) detected using a tangential push-pull method. It is to be noted here that, according to the tangential push-pull method, as described hereinabove with reference to FIG. 9 and the expression (5), returning light is received by first and second light receiving faces (A, D) and (B, C) juxtaposed in a direction along which a track extends across a line extending in a direction transverse to the track, and a difference signal between results of the light reception is detected. Thus, the difference between a component of the light reflected from a pit inclined in an advancing direction and another component of the reflected light inclined rearwardly of the advancing direction is used as a playback signal.

Accordingly, it is considered that also the track pitch can be augmented by such recording and playback of various data as and from wobbling of a groove wall as described above.

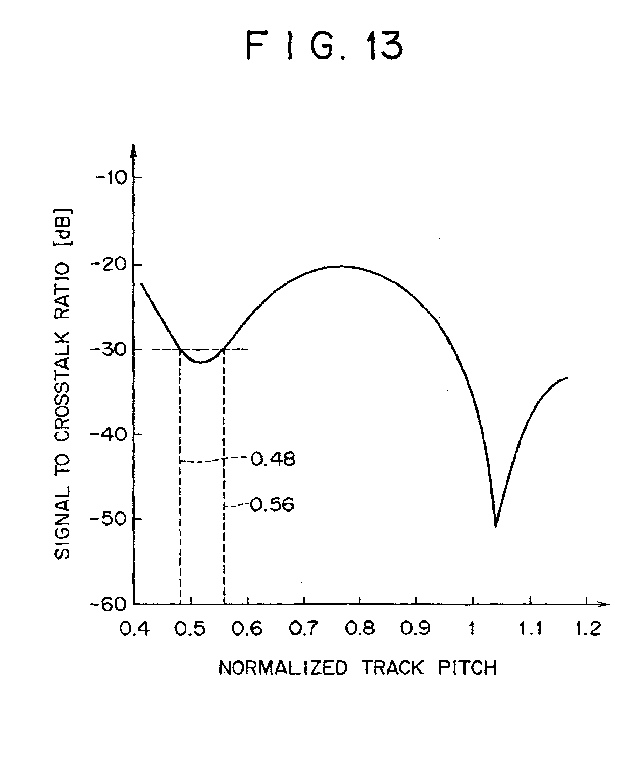

Such a characteristic diagram as shown in FIG. 13 was obtained when a signal to crosstalk ratio (hereinafter referred to as crosstalk ratio) of the playback signal TRF detected by the tangential push-pull method was detected using the normalized track pitch as a parameter. It is to be noted that, on the characteristic diagram of FIG. 13, the ratio between the amplitude of a playback signal and the amplitude of a crosstalk signal where a single carrier signal is recorded as wobbling of a groove wall is indicated in decibel and represents a relative toughness against a leak amount from an adjacent track or tracks. The axis of abscissa represents the normalized track pitch described above.

As can be seen clearly from FIG. 13, where information recorded as wobbling of a groove wall is detected using the tangential push-pull method, the crosstalk exhibits its minimum value at the normalized track pitch of approximately 0.52. If this is applied to the optical system for a DVD, then it corresponds to 0.57 $\mu$m, and since the track pitch prescribed in the DVD standards is 0.74 $\mu$m, it can be recognized that the crosstalk is minimized if the track pitch is raised to approximately 1.3 times that of a DVD. Further, it can be seen that a crosstalk ratio equal to or higher than 30 dB can be assured if the value of the normalized track pitch remains within the range from 0.48 to 0.56, and a crosstalk ratio equal to or higher than 26 dB can be assured if the value of the normalized track pitch is within the range from 0.44 to 0.60.

Thus, in recording and playback systems of the type described above, it is considered necessary to assure a crosstalk ratio equal to or higher than 30 dB for practical use, and it is considered necessary to assure a crosstalk ratio equal to or higher than 26 dB even where augmentation of the error correction method and the coding system is applied.

Therefore, in the present embodiment, the optical disk recording apparatus (FIG. 2) according to the first embodiment described above is constructed such that the mirrors MA and MB and the objective lens 12 are displaced toward an outer circumference direction of the disk original 2 during one rotation of the disk original 2 and the optical system and the dc offset voltage to be applied to the light deflectors 11A and 11B are adjusted so that the average distance between the inner circumference side and outer circumference side groove wall faces is set to 0.6 $\mu$ m. Consequently, the optical disk 40 is produced with the adjacent groove wall face distance D set to 0.6 $\mu$m.

Further, the optical disk playback 41 (FIG. 8) is constructed such that a laser beam whose wavelength $\lambda$ is 650 nm equal to that of the optical system for a DVD is irradiated upon the optical disk 40 through an objective lens whose numerical aperture NA is 0.6 to play back data recorded on the optical disk. In this instance, the normalized track pitch is 0.6/(0.65/0.6) = 0.55.

Consequently, in the present embodiment, the optical disk 40 and the optical disk playback apparatus are constructed so as to satisfy the following relational expression (6) to form tracks in a high density while assuring a crosstalk ratio equal to or higher than 30 dB:

$$0.48 < \frac{D}{\frac{\lambda}{NA}} < 0.56 \qquad (6)$$

With the present embodiment, by setting the optical disk and the optical disk playback apparatus so that the normalized track pitch may be 0.55, not only the effects of the first embodiment can be achieved, but also the characteristic of the optical system based on a tangential push-pull signal can be utilized effectively to suppress the crosstalk and bit errors can be prevented as much to achieve reduction of the track pitch or high density arrangement of tracks.

5. Other Forms

It is to be noted that, while, in the embodiments described above, it is described that an optical disk recording apparatus multiplexes two series of band-limited signals by quadrature modulation, the present invention-is not limited to this, and such two series of band-limited signals may be multiplexed by QAM or TCM (Trellis Code Modulation).

Further, while, in the embodiments described above, it is described that a multi-value signal of four values is produced from data of the low order side 2 bits and data of the high order side 2 bits and band-limited, the present invention is not limited to this but can be applied widely also where a multi-value signal is produced with various multi-values equal to three or more values.

Further, while, in the embodiments described above, it is described that a laser beam is deflected directly with a modulation signal, the present invention is not limited to this, and since a light deflector such as an AOD has a non-linear input/output characteristic, the signal level of a modulation signal may be corrected by means for correcting the nonlinear characteristic to drive the light deflector.

Further, while, in the embodiments described above, it is described that the modulation signals VX and VY are produced from the high order 2 bits and the low order 2 bits of the 4-bit parallel data DA2 and DB2, the present invention is not limited to this, and the modulation signals VX and VY may be produced from data of different series from each other.

Further, while, in the embodiments described above, it is described that a real part and an imaginary part obtained by Hilbert transformation are discriminated with predetermined threshold values to reproduce the data DA2 and DB2, the present invention is not limited to this, the data DA2 and DB2 may be reproduced based on most likelihood discrimination.

Further, while, in the embodiments described above, it is described that a servo pattern, a synchronizing pattern and so forth are recorded as a bit string, the present invention is not limited to this, and they may be recorded as wobbling of a groove or wobbling of a groove wave face.

Further, while, in the embodiments described above, it is described that a pilot signal serving as a reference for production of a carrier signal is superposed to produce a modulation signal, the present invention is not limited to this, and it is otherwise possible, for example, to utilize one bit used for production of a multi-value signal to transmit the reference for production of a carrier signal.

Further, while, in the embodiments described above, it is described that two series of multi-value signals are multiplexed by quadrature modulation, the present invention is not limited to this, and where a sufficient capacity can be assured or in a like case, only one series of multi-value signal may be recorded.

Further, while, in the embodiments described above, it is described that a multi-value signal whose signal level rises like an impulse is band-limited, the present invention is not limited to this, and it is otherwise possible to band limit and record a multi-value signal like a rectangular wave in place of a multi-value signal like an impulse if necessary.

Further, while, in the embodiments described above, it is described that a multi-value signal is frequency converted after it is band-limited, the present invention is not limited to this, and a multi-value signal may be band-limited after frequency converted.

Further, while, in the embodiments described above, it is described that recording is performed under the condition of a constant linear velocity, the present invention is not limited to this but can be applied widely also where recording is performed under the condition of a constant angular velocity, where recording is performed by zoning or in a like case.

Further, while, in the embodiments described above, it is described that wobbling of a groove wall face is detected from a tangential push-pull signal, the present invention is not limited to this but can widely apply various detection methods such as where a variation of the polarization plane of returning light is detected to detect wobbling of a groove wave face.

Further, while, in the embodiments described above, it is described that two laser beams are used to wobble the inner circumference side wall face and the outer circumference side wall of a groove, the present invention is not limited to this but can widely apply various constructions such as where a laser beam for exposing a central portion of a groove is disposed separately to expose a disk original to three laser beams.

Furthermore, while, in the embodiments described above, it is described that data recorded on the inner circumference side wall face and the outer circumference side wall face of a groove are selectively played back on the playback side, the present invention is not limited to this, and the data may be played back simultaneously and parallelly.

Further, while, in the embodiments described above, it is described that a groove wall face is wobbled, the present invention is not limited to this, and, for example, the groove itself may be wobbled or data of the type mentioned may be recorded as a variation in width or depth of the groove. Further, the present invention can be applied widely also to an optical disk of the phase variation type or a magneto-optical disk to record a mark.

Further, while, in the embodiments described above, it is described that desired data is recorded by a variation of a groove which is a guide groove for a laser beam, the present invention is not limited to this but can be applied widely also where desired data is recorded conversely by a variation of a rib which is a spiral or concentrical elongated projection extending along a track.

Further, while, in the embodiments described above, it is described that desired data is recorded by irradiation of a laser beam, the present invention is not limited to this but can be applied widely also where desired data is recorded by irradiation of an electron beam.

Furthermore, while, in the embodiments described above, it is described that a disk original is exposed to light to produce an optical disk, the present invention is not limited to this but can be applied widely to various optical disk systems such as, for example, where desired data is recorded onto an optical disk of the recordable type and further applied widely to an information recording medium in the form of a card and an information recording apparatus and an information playback apparatus by which the information recording medium in the form of a card is accessed.

On the other hand, while, in the second embodiment described above, a case wherein a crosstalk ratio equal to or higher than 30 dB is described, the present invention is not limited to this, and where it is tried to assure a crosstalk ratio equal to or higher than, for example, 26 dB, tracks can be formed in a high density by setting track pitch so as to satisfy the following expression (7) :

$$0.44 < \frac{D}{\frac{\lambda}{NA}} < 0.60 \qquad (7)$$

Further, while, in the second embodiment described above, it is described that the density of tracks is increased to reduce the crosstalk by setting of the optical system and the track pitch in addition to high density recording in a track extension direction premised on the construction of the first embodiment, the present invention is not limited to this and, where data are recorded as wobbling of a groove or the like, merely a construction wherein only tracks are provided in a high density may be adopted.

While preferred embodiments of the present invention have been described using specific terms, such description is for illustrative purposes only, and it is to be understood that changes and variations may be made without departing from the spirit or scope of the following claims.

**Claims**

1. An information recording medium on which data of three or more values are recorded:

   the data being recorded as a displacement of one of a groove, a groove wall, a mark and a mark wall in response to a modulation signal; the modulation signal being produced from a band-limited signal produced by suppressing a dc component and high frequency components of a data string signal of a broad frequency band, whose value is changed over among three or more values in response to a value of the data, within a range within which intersymbol interference does not occur between adjacent data.

2. An information recording medium according to claim 1, wherein the modulation signal is produced by - frequency converting the band-limited signal with a predetermined carrier signal, and the frequency of the carrier signal is set to a frequency equal to or higher than one half a frequency band to which the data string signal is band-limited.

3. An information recording medium according to claim 2, wherein the modulation signal is a signal obtained by quadrature amplitude modulation of the data string signal or a signal obtained by QAM modulation of the data.

4. An information recording medium according to claim 1, wherein the groove or the mark has an inner circumference side wall face and an outer circumference side wall face displaced with data independent of each other so that different data from each other are recorded on the inner circumference side wall face and the outer circumference side wall face.

5. An information playback apparatus wherein a laser beam is irradiated upon an information recording medium and returning light is received and processed to play back data recorded on the information recording medium, the information recording medium having the data recorded thereon such that one of a groove, a groove wall, a mark and a mark wall is displaced with a modulation signal produced by suppressing a dc component and high frequency components of a data string signal of the data within a range within which intersymbol interference between adjacent data does not occur, said information playback apparatus comprising:

   detection means for detecting the displacement of the one of the groove, groove wall, mark and mark wall with respect to the track center and outputting a detection result; and

decoding means for processing the detection result to play back the data of three or more multi-values.

6. An information playback apparatus according to claim 5, wherein said decoding means includes integration means for integrating the detection result and outputting an integration result, frequency characteristic correction means for correcting a frequency characteristic of the integration result, and demodulation means for quadrature amplitude demodulating or QAM demodulating an output signal of said frequency characteristic correction means.

7. An information playback apparatus according to claim 5, further comprising tracking control means for selectively irradiating the laser beam upon one of wall faces of the groove or mark.

8. An information playback apparatus according to claim 5, wherein the detection result by said detection means is a tangential push-pull signal.

9. An information playback apparatus according to claim 5, wherein said detection means detects a variation of a polarization plane of the returning light and outputs the detection result.

10. An information playback method wherein a laser beam is irradiated upon an information recording medium and returning light is received and processed to play back data recorded on the information recording medium, the information recording medium having the data recorded thereon such that one of a groove, a groove wall, a mark and a mark wall is displaced with a modulation signal produced by suppressing a dc component and high frequency components of a data string signal of the data within a range within which intersymbol interference between adjacent data does not occur, the information playback method comprising:

a displacement detection step of detecting the displacement of the one of the groove, groove wall, mark and mark wall with respect to the track center; and

a decoding step of processing the detection result of the displacement to play back the data of three or more multi-values.

11. An information playback method according to claim 10, wherein the decoding step includes:

a step of integrating the detection result and outputting an integration result;

a frequency characteristic correction step of correcting a frequency characteristic of the integration result; and

a step of quadrature amplitude demodulating or QAM demodulating an output signal by the frequency characteristic correction step.

12. An information recording apparatus for irradiating a laser beam upon an information recording medium to record data on a track of the information recording medium, comprising:

modulation means for producing a modulation signal from a band-limited signal produced by suppressing a dc component and high frequency components of a data string signal of a broad frequency band, whose value is changed over among three or more values in response to a value of the data, within a range within which intersymbol interference does not occur between adjacent data; and

optical means for displacing the laser beam in a direction transverse to the track in response to the modulation signal.

13. An information recording apparatus according to claim 12, wherein said modulation means includes:

multi-value signal production means for producing the data string signal;

band limiting means for band limiting the multi-value signal; and

frequency conversion means for frequency converting an output signal of said band limiting means with a predetermined carrier signal;

the carrier signal having a frequency set to a frequency equal to or more than one half the frequency band.

14. An information recording apparatus according. to claim 12, wherein said modulation means quadrature amplitude modulates or QAM modulates the data string signal to produce the modulation signal.

15. An information recording method for irradiating a laser beam upon an information recording medium to record data on a track of the information recording medium, comprising:

a modulation step of producing a modulation signal from a band-limited signal produced by suppressing a dc component and high frequency components of a data string signal of a broad frequency band, whose value is changed over among three or more values in response to a value of the data, within a range within which intersymbol interference does not occur between adjacent data; and

a step of displacing the laser beam in a direction transverse to the track in response to the modulation signal.

16. An information recording medium on which data are recorded as a displacement of one of a groove, a groove wall, a mark and a mark wall:

where the average distance between adjacent grooves, adjacent groove walls, adjacent marks and adjacent mark wall faces is represented by D, the numerical aperture of an optical system for playing back the data by NA and the wavelength of a laser beam by said optical system by λ, the average distance, the numerical aperture and the wavelength are set so as to satisfy the following expression:

$$0.44 < \frac{D}{\frac{\lambda}{NA}} < 0.60$$

17. An information recording medium according to claim 16, wherein the displacement of the one of the groove, groove wall face, mark and mark wall face is formed in accordance with a modulation signal, and the modulation signal is produced from a band-limited signal produced by suppressing a dc component and high frequency components of a data string signal of a broad frequency band, whose value is changed over among three or more values in response to a value of the data, within a range within which intersymbol interference does not occur between adjacent data.

18. An information recording medium according to claim 17, wherein the modulation signal is produced by frequency converting the band-limited signal with a predetermined carrier signal, and the frequency of the carrier signal is set to a frequency equal to or higher than one half a frequency band to which the data string signal is band-limited.

19. An information recording medium according to claim 18, wherein the modulation signal is a signal obtained by quadrature amplitude modulation of the data string signal or a signal obtained by QAM modulation of the data.

20. An information recording medium according to claim 16, wherein the groove or the mark has an inner circumference side wall face and an outer circumference side wall face displaced with data independent of each other so that different data from each other are recorded on the inner circumference side wall face and the outer circumference side wall face.

21. An information playback apparatus, comprising:

an optical system for irradiating a laser beam of a wavelength upon an information recording medium;

a light receiving element for receiving returning light from the information recording medium;

means for processing a signal from said light receiving element to play back data recorded on the information recording medium;

said light receiving element having first and second light receiving faces for receiving the returning light which are juxtaposed in a direction along which a track extends across a line extending in a direction transverse to the track;

arithmetic operation means for outputting a difference signal of results of light reception of said first and second light receiving faces of said light receiving element; and

demodulation means for processing the difference signal to demodulate the data;

where the track pitch of the information recording medium is represented by D, the numerical aperture of said optical system by NA and the wavelength of the laser beam by λ, the track pitch, the numerical aperture and the wavelength are set so as to satisfy the following expression:

$$0.44 < \frac{D}{\frac{\lambda}{NA}} < 0.60$$

22. An information playback apparatus according to claim 21, wherein the information recording medium has the data recorded thereon as one of a displacement of a groove, a displacement of a groove wall, a displacement of a mark and displacement of a mark wall formed on the track, and further comprising a tracking control mechanism for controlling said optical system for tracking so that a beam spot by the laser beam may scan the track.

23. An information playback apparatus according to claim 21, wherein said demodulation means includes integration means for integrating the difference signal, and frequency characteristic correction means for correcting a frequency characteristic of the difference signal.

24. An information playback apparatus according to claim 21, wherein said demodulation means demodulates the data by quadrature amplitude modulation decoding means.

25. An information playback apparatus according to claim 21, wherein said demodulation means demodulates the data by QAM demodulation means.

26. An information playback method for irradiating a laser beam of a wavelength through an optical system upon an information recording medium on which data are recorded as a displacement of one of a groove, a groove wall face, a mark and a mark wall face and receiving returning light from the information recording medium to play back data recorded on the information recording medium, comprising:

a step of receiving the returning light by means of first and second light receiving faces of said light receiving element which are juxtaposed in a direction along which a track extends across a line extending in a direction transverse to the track and producing a difference signal of results of the light reception by said first and second light receiving faces; and
a step of processing the difference signal to demodulate the data;
where the average distance between two adjacent grooves, adjacent groove walls, adjacent marks and adjacent mark wall faces is represented by D, the numerical aperture of said optical system by NA and the wavelength of the laser beam by $\lambda$, the average distance, the numerical aperture and the wavelength are set so as to satisfy the following expression:

$$0.44 < \frac{D}{\frac{\lambda}{NA}} < 0.60$$

# FIG. 1

EP 1 115 108 A2

FIG.2

FIG.2

DB → INFORMATION SOURCE (3B) → DB1 → ECC (15B) → 8 → BIT NUMBER CONVERSION (16B) → 4 → DB2,(ab0~ab3) → MODULATION CIRCUIT (17B) → VB

LASER (6) → L0 → OPTICAL MODULATOR (7) → L1 → 9 → L2B → LIGHT DEFLECTOR (11B) → MB

TG (13) → SLCT, BCLK → SYNCHRONIZING PATTERN PRODUCTION (8)

10 → L2A → LIGHT DEFLECTOR (11A) → VA → MA

L3B, L3A → 12

DA → INFORMATION SOURCE (3A) → DA1 → ECC (15A) → 8 → BIT NUMBER CONVERSION (16A) → 4 → DA2,(ab0~ab3) → MODULATION CIRCUIT (17A)

SPINDLE SERVO (5) → 4 → FG

2

1

EP 1 115 108 A2

# F I G. 3

GROOVE
WALL FACE

GROOVE

L3A

0.2 μm

L3B

GROOVE
WALL FACE

GROOVE

EP 1 115 108 A2

FIG. 4A

FIG. 4B

FIG. 4C

FIG. 4D

FIG. 4E

# F I G. 5

# F I G . 6

GROOVE   GROOVE

1.2 [μm]

# FIG. 7

GROOVE WALL FACE A

GROOVE

GROOVE WALL FACE B

TRACK CENTER

A

40

EP 1 115 108 A2

# FIG.8

DA2 (ab0 ～ab3), DB3 (bb0 ～bb3)

TRF

DECODING CIRCUIT

51

BIT NUMBER CONVERSION

52

SF

ECC

53

DA, DB

40

45

42

A ～ H

47

MA

TK, FS

HF

SERVO CIRCUIT

44

FO

49

BPF

FP

50

PLL

41

48

ADDRESS DECODING

BCLK

EP 1 115 108 A2

# F I G. 9

LAND

SS-1

46SS-1

H | G

EXTENDING DIRECTION
OF GROOVE
(CIRCUMFERENCE
 TANGENTIAL DIRECTION)

C | B
D | A

SM

46SM

LAND

SS1

46SS1

F | E

GROOVE
WALL FACE

GROOVE
WALL FACE

GROOVE

RADIAL
DIRECTION

# F I G. 10

# F I G. 11

# F I G.12

# F I G. 13

# F I G. 14A

# F I G. 14B

EP 1 115 108 A2